# EUROPEAN PATENT SPECIFICATION

(11) **EP 0 689 385 B1**
(45) Date of publication and mention of the grant of the patent: **23.05.2001**
(21) Application number: 94908236.6
(22) Date of filing: 03.03.1994
(51) Int. Cl.: A23C 19/093, A23C 19/086, A21D 2/26, A23D 9/04

(54) **CHEESE-BASED DRY FLAKE PRODUCT FOR BAKERY PURPOSES**
AUF KAESE BASIERTES TROCKENES FLOCKENPRODUKT ZUR VERWENDUNG IN DER BAECKEREI
PRODUIT EN FLOCONS SECS A BASE DE FROMAGE, UTILISABLE EN BOULANGERIE

(30) Priority: 05.03.1993 US 26738
(43) Date of publication of application: 03.01.1996
(73) Proprietor: UNILEVER N.V., 3013 AL Rotterdam (NL); UNILEVER PLC, London EC4P 4BQ (GB)
(72) Inventor: Miller, Van, Erin, Ontario NOB 1TO (CA); Miller, Rene, Guelph, Ontario N1H 7J9 (CA)
(74) Representative: Rosen Jacobson, Frans Lucas M.
(86) International application number: CA9400121
(87) International publication number: WO9419960

(56) References cited:
- GB-A- 821 995
- US-A- 2 279 202
- US-A- 3 582 353
- US-A- 3 814 825
- US-A- 3 843 808
- US-A- 4 567 047
- US-A- 4 643 907
- US-A- 5 064 669

## Description

### FIELD OF THE INVENTION:

This invention relates to cheese-based dry flake products intended for incorporation into baked goods and other flour confections. The present invention specifically provides cheese-based flakes or small discrete pieces or particles of prepared cheese-based product which may be used for baking purposes so as to incorporate cheese into baked goods and other flour confections, where the flavor of the cheese is retained in such a manner that it may be discerned when the baked product is consumed. The product, the process for making the product, and apparatus on which the product may be prepared, are described.

### BACKGROUND OF THE INVENTION:

It has been traditional for many years for the bakery industry, and the baked confection industry, to bring to the consuming product baked goods and flour confections where cheese is a principal flavor ingredient. Such products may include buns and muffins, biscuits, other breads and loaves, sweet confections having a cheese additive, and so on. However, the preparation of baked products including cheese, or even pizza, will essentially destroy the flavor and/or texture of the cheese due to the heat at which the product is baked.

In the preparation of such products as cheese bread, it has been traditional to use cheese flakes or grated cheese taken directly from block cheese by shaving or grating the cheese block. The cheese flakes or grated cheese powder are added to the mixture to be baked -- usually just prior to the baking process. Even so, however, the baked product, or at least the cheese in the baked product, may become essentially flavorless, or the cheese may acquire a gummy texture, or the lactose contained in the cheese may have become burned or caramelized, leaving a burnt and otherwise unpleasant taste sensation. Indeed, it does not go unnoticed that mozzarella cheese, the cheese most commonly used in the preparation of pizza, may become less flavorful than it was previously and/or become gummy in its texture.

In the preparation of baked product such as cheese bread, where grated cheese has been made using bulk cheese product, the baking process causes the water constituent of the cheese to evaporate. Then, the protein constituent of the cheese, which remains, acts like a gum, and also the lactose constituent of the cheese will begin to caramelize. That is why the traditional use of grated cheese or cheese flakes prepared by grating, shaving or flaking brick cheese or bulk cheese, results in less than satisfactory baked product.

The general and approved definition of cheese, and the standards by which cheese is defined, require that cheese when it is in its brick or bulk form contains approximately 50% to 52% of moisture, with 23% to 25% butter fat, 9% to 10% protein constituents, and the balance or remainder being lactose. Cheese may, itself, be dried so as to substantially drive off most of the moisture constituent of the block or bulk cheese, while retaining the remainder of the cheese constituents as cheese solids.

If those cheese solids can be obtained and preserved, as is possible merely by driving off substantially all of the water or moisture content of the cheese, then most of the flavor sensations of the cheese would remain. However, the cheese solids or powder that would then remain cannot themselves be incorporated into baked goods.

The present inventors have quite unexpectedly discovered, however, that if cheese solids which are obtained by driving off the moisture content of brick or bulk cheese are then suspended in compatible oils or liquid fats, and then otherwise treated as described in greater detail hereafter, then a cheese-based product results which can be baked into baked goods or other flour confections. The flavor sensations and constituency of the cheese in the baked product are quite satisfactory.

It is recognized that the preparation of baked cheese products or other flour confections cannot simply be achieved by preparing flakes, chips or grated cheese from bulk or brick cheese and incorporating them into the bakery mix in much the same way as, for example, chocolate chips are incorporated into baked products. This is because, as noted above, the water or moisture content of the cheese evaporates during baking and the evaporation takes with it a certain portion of the flavor sensations that may otherwise have been present. Also, as noted, the remaining protein acts like a gum, and the lactose may caramelize.

One prior art approach is that of FEHR *et al* U.S. Patent 3,582,353 issued June 1, 1971. There, a flavored and/or colored shortening material of hard fat having a sharp melting point is used and distributed into the bakery mix. What results is distributed localized areas throughout the baked product, when it has been baked, that have a particular mouth sensation similar to butter. The flavoring materials may include spices, simulated meat, fruit, fowl or vegetable flavors, or other dairy flavors, as well as organic acids to provide sour flavors and the like. The intent has been particularly to provide a butter taste sensation using hard and brittle flakes, and although cheese is mentioned among the many flavoring constituents that may be used, the resulting baked product is merely reported to have identifiable localized areas of the colored and/or flavored flake in spots throughout the baked product that have a discernable taste. It is recognized that there may be some discernable cheese flavor, but it is also noted that the FEHR *et al* patent describes only localized areas of concentrated flavor, which is not necessarily a true or real flavor and which might be specifically of a more gummy texture and/or caramelized flavor. Moreover, FEHR *et al* provide a product which is essentially fat, with very little solid constituent present.

The present invention provides a cheese-based dry flake product which does not exhibit the shortcomings of the prior art, and the common bakery experiences described above. By providing a cheese-based dry flake product the present invention will provide what may be described as a cheese product for incorporation into baked products and other flour confections, where the nature of the cheese-based product may be such that its characteristics such as its viscosity and its ingredient contents may be determined and adjusted or tailored for specific intended uses. In other words, the present invention will provide a cheese ingredient for incorporation into such varying products as tea biscuits which may have a relatively fast baking time -- for example, 10 or 15 minutes -- at baking temperatures of about 177°C (350°F) while also providing other cheese-based flavoring ingredients to be baked into cheese breads which may be baked for 30 or 40 minutes at temperatures above 177°C.

In order to do so, then the process for preparation of the cheese-based dry flake product of the present invention must be such that it can be controlled for consistency of results, and controlled for differences between cheese-based dry flake products being manufactured at different times, as necessary.

In order for that to happen, certain criteria are required. Specifically, it is necessary that the formulation for preparation of the cheese-based dry flake product must incorporate the use of compatible oils that are compatible both with the cheese solids being used and with the bakery or other flour confection to be manufactured.

As will be described hereafter, suitable cheese-compatible and bakery-compatible oils will generally be liquid butter fats -- derived from milk fat -- or vegetable oils that display similar solid fat index and melting points as those of butter fat. Other characteristics, generally stated, are that oils to be used in the formulation of cheese-based dry flake products according to the present invention should be such that when they are solidified they will not smear or become part of the shortening being mixed into the bakery mix prior to the baking process; the oils should be such that when they are solidified they will stay relatively firm during the baking process and yet have a mouth sense in that they will essentially melt in the mouth at approximately 35°C; and of course, the oils or fats must be such that they will not otherwise conflict with or be intolerable with the intended baked goods in which they will be present.

A corollary to the above is that, as is now being required more and more frequently and more rigidly, the oils or fats and other ingredients used to prepare cheese-based dry flake products in keeping with the present invention must be compatible with the requirements for controlled ingredient legends and other labelling provisions that are imposed on food products.

It is therefore a purpose of the present invention to provide cheese-based dry flake products which are intended for incorporation into baked goods and flour confections. Such cheese-based dry flake products as are provided by the present invention may have varying specific formulations, depending on their intended use in a baked product or other flour confection. However, the cheese-based dry flake products of the present invention have a significant cheese solids content.

The present invention therefore provides cheese-based dry flake products that may have defined ranges of solid fat and liquid fat components at defined temperatures, so as to be capable of being incorporated into baked goods and other flour confections and so that the baked goods or flour confections may be appropriately labelled as having a cheese ingredient.

In keeping with the above, the present invention provides processes for the preparation of cheese-based dry flake products intended for incorporation into baked goods and flour confections.

Likewise, in keeping with the above, the present invention also provides process steps whereby the prepared cheese-based dry flake products may have specific and controlled physical characteristics including the size of the individual discrete flakes being produced.

Finally, the present invention provides an apparatus for the preparation of the cheese-based dry flake product where such product having defined characteristics and formulations may consistently be made with high degrees of automation.

### BRIEF DESCRIPTION OF THE DRAWINGS:

The present invention will be described in greater detail hereafter, in association with the accompanying drawings, in which:
Figure 1 is a schematic floor plan of a manufacturing facility in which cheese-based dry flake products of the present invention may be made;
Figure 2 is an idealized elevation view of the front end of a cooling tunnel and the associated equipment, in keeping with the present invention;
Figure 3 is an idealized plan view of the apparatus of Figure 2; and
Figure 4 is an idealized elevation of the exit end of a cooling tunnel of the apparatus of the present invention.

### DETAILED DESCRIPTION OF THE PREFERRED EMBODIMENTS:

The following discussion will be carried out essentially in three portions. First, the cheese-based dry flake product of the present invention will be described in terms of its physical characteristics, its constituency and formulations, and its purposes for incorporation into baked goods and flour confections. Then, the process for preparation of the cheese-based dry flake products of the present invention will be described in greater detail than simply as by reference during the discussion of the product. Finally, the apparatus on which the cheese-based dry flake products can be made will be discussed; and the apparatus will also be referred to during discussion of the process for manufacturing the products.

Our invention of the cheese-based dry flake product is as formulated in claim 1. The cheese-based dry flake products of the present invention thus will have a formulation with from substantially 0% to about 2% moisture, from about 20% to about 50% of cheese solids, with the balance being a cheese-compatible and bakery-compatible oil.

The cheese solids herein are naturally occurring cheese solids that are derived from cheeses from which substantially all water has been removed. Those cheese solids therefore comprise the remaining or residual butterfat, protein and lactose constituents of the bulk or brick cheeses from which the water content has been removed.

The cheese-compatible and bakery-compatible oils that are mixed with the cheese solids are substantially liquid in the range of 35 to 40°C and come from the group generally consisting of suitable vegetable oils and liquid butter fats, and mixtures thereof. By suitable vegetable oils, what is meant is oils that are compatible with the intended bakery product or other flour confection, and of course which must be entirely suitable for human consumption. Likewise, the cheese-compatible and bakery-compatible oils must exhibit generally similar solid fat index characteristics and generally similar melting points as those of butterfat. Butterfat is, of course, the fat or oil constituent of naturally occurring milk. The specific solid fat requirements hereof are given in claim 1.

Finally, the cheese-compatible and bakery-compatible oils that are used in keeping with the present invention must have a eutectic capacity with respect to butterfat. That means that the cheese-compatible and bakery-compatible oils must be miscible -- capable of being mixed and enter into an homogenous mixture -- with butterfat, in any proportion of the cheese-compatible and bakery-compatible oils being used and the butterfat, at temperatures of 35 to 40°C.

The ratio of the oils or fats used in products according to the present invention together with butterfat will depend to a greater or lesser extent on the intended baked product into which the cheese-based dry flake product is to be incorporated.

Of course, depending on the intended use, and as well depending on the bulk or brick cheese product from which the cheese solids have been derived, the balance constituent of the cheese-based dry flake product according to the present invention may optionally further comprise additional ingredients. Those ingredients may be, for example, flavoring ingredients such as spices, herbs, cheese-compatible enzymes, salt, and other cheese-compatible natural flavors. Still further, the balance constituent of the cheese-based dry flake products may comprise small amounts of additional coloring ingredients such as annatto colors or other cheese-compatible natural coloring agents.

As noted above, the characteristic curves which describe the solid fat index and melting points of the cheese-compatible and bakery-compatible oils and of butterfat should be substantially similar to each other. Moreover, the cheese-compatible and bakery-compatible oils should exhibit the characteristic that they are sufficiently stable at about room temperature (20°C ±) so that the oils will not smear during mixing with other prescribed ingredients of the baked goods and flour confections being made, prior to those baked goods and flour confections being baked. In other words, the cheese-compatible and bakery-compatible oils will not become part of the shortening being used in the bakery product, and thereby upset the formulation or recipe for the bakery product.

Still further, the formulation of the cheese-based dry flake product of the present invention should provide that the cheese-compatible and bakery-compatible oils have the characteristic of sufficiently slow flow rates so that they stay substantially firm during a baking process for the bakery product or flour confection being baked. Typically, the baking process may take place at temperatures from about 170°C up to about 200°C, and the baking process may extend for periods of from about 5 minutes up to about 45 minutes.

When bakery products such as cheese bread are being manufactured, the dough from which the bread is baked is usually proofed prior to baking. Thus, the cheese-compatible and bakery-compatible oils should also be such that they have sufficiently slow flow rates so that they stay substantially firm during a bakery proofing process which may take place at temperatures of from about 40°C up to about 60°C, and for periods ranging from a few minutes up to about a few hours. On the other hand, the cheese-compatible and bakery-compatible oils will generally have a melting point of 35°C to 40°C, so that they will melt in the mouth when the baked goods or flour confections are eaten.

Typically, cheese-based dry flake products according to the present invention will have a physical thickness when they are first produced of from 1.0 mm to 3.0 mm. The flakes are generally rectangular or square when first produced, and will have a length along each of their sides of from 1.0 cm to 3.0 cm. The cheese-based dry flake products will, when they are first introduced into the bakery mix, or even when they are delivered from being manufactured, exhibit the characteristic of being a dry flake which is relatively brittle. Although the dry flakes may fracture during handling, they may for the most part have the dimensions discussed above. However, when the dry flake is, in fact, mixed into the bakery recipe, the individual pieces may break into smaller pieces but they still retain their physical integrity for when the bakery product is being eaten.

The following table sets out the most desirable ranges of solid fat and liquid fat components for the cheese-compatible and bakery-compatible oils to be used in the preparation of the cheese based dry flake products of the present invention. Specifically, the following table addresses the solid fat index curve ranges for vegetable oils; it being recognized that vegetable oils which exhibit the solid fat index curve with defined ranges of solid fat and liquid fat components at the defined temperatures are miscible at elevated temperatures with butterfat in any proportion, and will solidify or crystallize at lower temperatures as an homogeneous mixture. Thus, as noted above, the so-called "eutectic capacity" of such vegetable oils and of butterfat permit their miscibility in any proportion, the mixture also exhibits the solid fat index curve characteristics as defined in the following table.

| **Solid Fat Index Curve Characteristics for Vegetable Oils** |
|---|
| 10.0°C -- 43-66% solid fats, balance liquid fats |
| 21.1°C -- 32-52% solid fats, balance liquid fats |
| 26.6°C -- 20-44% solid fats, balance liquid fats |
| 33.3°C -- 6-25% solid fats, balance liquid fats |
| 40.0°C -- 0-5% solid fats, balance liquid fats. |

It may be that, in order to achieve the solid fat index curve characteristics set forth in the table, above, it will be necessary to process the solid fats of the vegetable oils being used by blending them, or fractionating, or hydrogenating, but only to the extent necessary so as to obtain the solid fat index curve having the defined ranges of solid fat and liquid components at the defined temperatures.

In general, the cheese-compatible and bakery-compatible oils should be free of mono-diglycerides or other additives.

Turning now to the process by which the dry flake product as described above is manufactured, in its broadest sense the process is defined in claim 9 and thus comprises at least the following steps:
(a) Mixing said cheese solids and said cheese-compatible and bakery-compatible oil in a mixer so as to obtain a substantially homogenous mixture, said mixing step being carried out at a temperature of 40°C ± 1.5°C.
(b) Transferring said homogenous mixture to a holding tank, wherein the temperature of said homogenous mixture is maintained at 40.5°C to 42°C.
(c) Continuously agitating said homogenous mixture while it is in said holding tank.
(d) Pumping said homogenous mixture to a tempering unit, continuously agitating said homogenous mixture, while in said tempering unit and slightly cooling said homogenous mixture to 33°C ± 1°C.
(e) Transferring said slightly cooled homogenous mixture and depositing the same in a substantially thin and substantially even layer on a moving belt.
(f) Passing said moving belt through a cooling tunnel so that any portion of said mixture remains in said cooling tunnel for from 3 minutes to 6 minutes, and is cooled to a temperatures of from 6°C to 12°C.
(g) Breaking said cooled mixture into discrete dry cooled flakes, as it exits said cooling tunnel on said belt, and
(h) Removing said discrete dry cooled flakes from said belt for further handling and/or storage and/or shipping.

Preferred embodiments of the process according to the invention are formulated in claims 10 to 16.

It follows, from all of the above, that the oils and/or liquid fats being used are substantially in a liquid phase above about 35°C to 40°C, and are miscible as liquids, and they are substantially solidified at least at about 6°C to about 120°C. Moreover, once solidified, they will remain relatively firm and will show no tendency to smear at about room temperature (20°C ±).

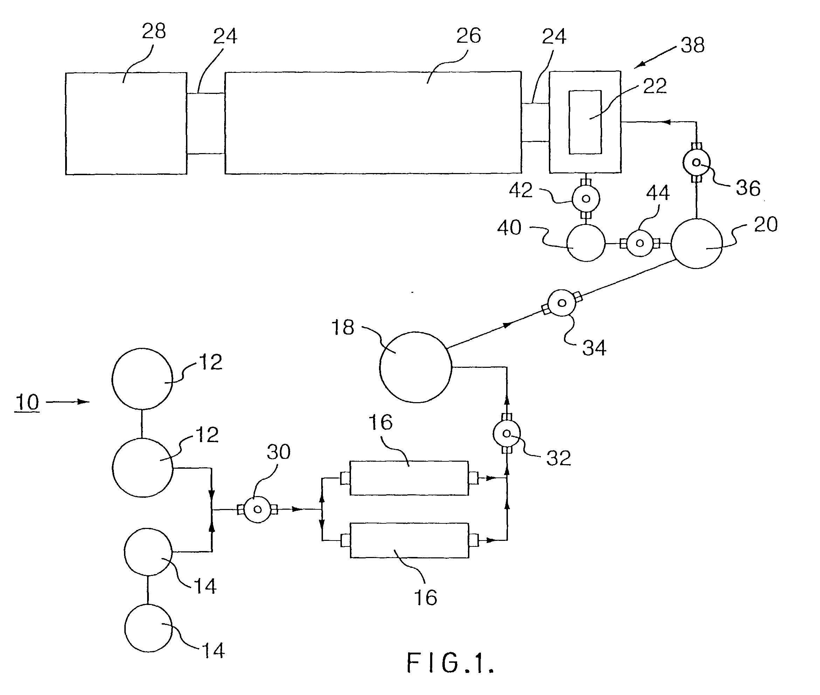

Referring to Figure 1, the apparatus is identified by the reference numeral 10, and comprises the following generally defined elements or principal components:

There may be a series of storage tanks such as tanks 12 and 14 in which the substantially dried cheese solids, the cheese-compatible and bakery-compatible oils, flavoring ingredients and coloring ingredients may be stored. The precise nature of those storage tanks is not material to the present discussion, but it should be stated that in general those storage tanks and all associated piping and other components are made from suitable materials such as stainless steel in which food ingredients can be safely stored and handled under sanitary conditions. In general, the cheese-compatible and bakery-compatible oils, and perhaps even the other dry ingredients such as the cheese solids, and the coloring and flavoring additives, may be maintained in the storage tanks 12 and 14 at temperatures of 42°C to 45°C prior to being used.

In any event, appropriate amounts of the various ingredients are pumped or transferred using transfer pump 30 to at least one thermostatically controlled mixer 16. Each thermostatically controlled mixer 16 is a high torque closed mixer. Step (a) is carried out in the mixers 16 at 40°C ± 1.5°C until a substantially homogenous mixture of the ingredients is achieved. The viscosity and the ingredient content of the homogenous mixture that is achieved in the high torque mixer 16 will be dictated by the intended end use of the cheese-based dry flake product being manufactured, as discussed above.

Then, using the first process pump 32, the resulting mixture is pumped to at least one holding tank 18, as shown. As noted with respect to step (b), the homogenous mixture is maintained in the holding tank at a temperature of 40.5°C to 42°C; and in keeping with step (c), the homogenous mixture is continuously agitated while it remains in the holding tank 18. By continuously agitating the homogenous mixture in the holding tank 18, the cheese solids are maintained in suspension in the cheese-compatible and bakery compatible oils, and thereby the homogeneity of the mixture is maintained.

Then, as required and on demand, the mixed and homogenous liquid having the cheese solids and other ingredients in suspension in the oils is pumped using the second process pump 34 to a tempering unit 20, in keeping with step (d). The tempering unit 20 is a heat exchanger, and while the homogenous mixture is in the tempering unit 20 it is also continuously agitated while being slightly cooled to a temperature of 33°C ± 1°C. By cooling the homogenous mixture, the crystallization process for the liquid homogenous mixture is initiated, with the crystallization being carried out ultimately within the cooling tunnel as described hereafter. Because the dry flake product is a crystallized product, it is important that the crystallization process be initiated under controlled conditions, and that will occur in the tempering unit. As the crystallization begins, and as the homogenous product beings to cool, it also becomes more viscous.

By the time the slightly cooled mixture, at about 33°C ± 1°C leaves the tempering unit 20, approximately 5% to 8% of the oil constituent has crystallized.

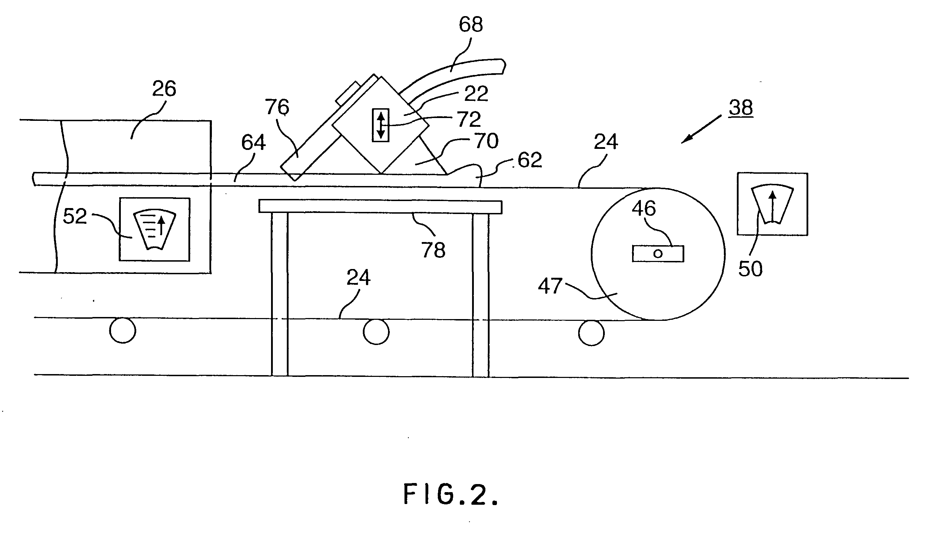

The slightly cooled homogenous mixture is then transferred to a moving belt 24, using a third process pump 36. In keeping with step (e), the slightly cooled homogenous mixture is deposited on the moving belt in a substantially thin and substantially even layer. That is accomplished by pumping the mixture onto the surface of the belt 24 just behind an adjustable levelling means 22, which is supported on table 78. (see fig 2) The levelling means 22 is described in greater detail hereafter, but it is noted that the initial product is placed on the upper surface of the belt 24 at 62; and after passing beneath the levelling means 22 it forms a substantially thin and substantially even layer 64. (cf. fig 2)

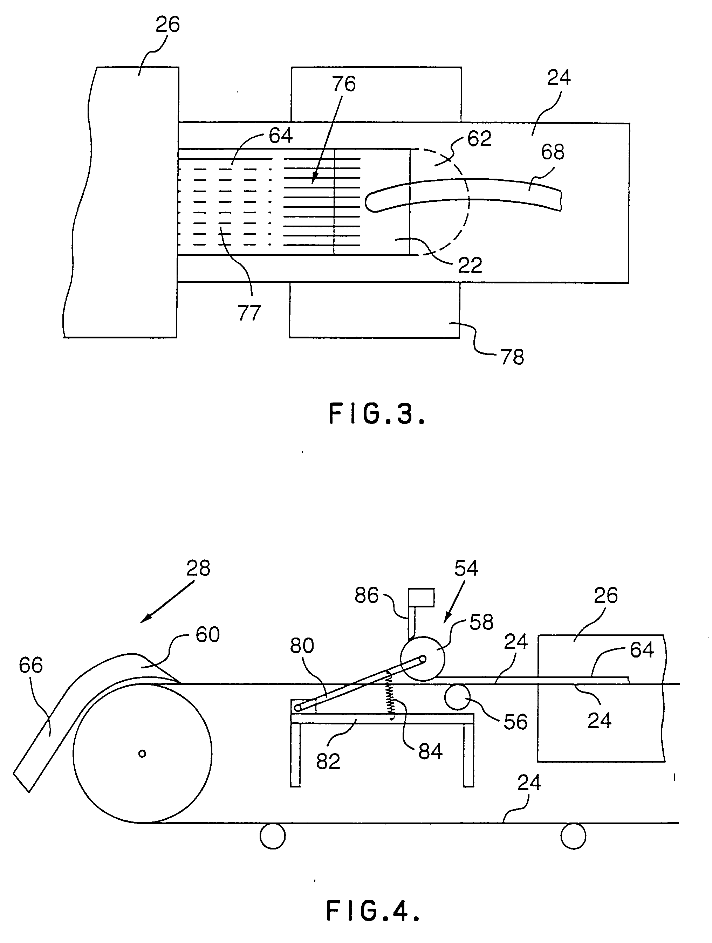

Then, as described in step (f) above, the moving belt 24 and the substantially thin and substantially even layer 64 is passed through a cooling tunnel 26. The speed of the moving belt may be adjusted so that any portion of the mixture in layer 64 remains in the cooling tunnel 26 for from 3 minutes to 6 minutes, and is cooled to a temperature of from 6°C to 12°C when it exits the cooling tunnel at the product handling station 28. The by then cooled and dried layer 64 then passes through a breaking station 54 where the layer 64 is broken in discrete dry cooled flakes, in keeping with step (g). (cf fig 4)

Finally, the discrete dry cooled flakes are removed in keeping with step (h) from the belt 24 for further handling and/or storage and/or shipping. Typically, the flakes are removed from the belt 24 using a scraper 60 having delivery chute 66 associated with it. (cf fig 4)

However, it will be noted in Figure 1 that there is also associated with the delivery station 38 at the delivery end of the belt 24 other associated equipment. Specifically, there is provided a surge tank 40, with which is associated a fourth process pump 42 and a fifth process pump 44. What happens is that any excess mixture deposited at 62 on the belt 24 that is not retained on the belt as it passes beneath the levelling means 22 is returned by the pump 42 through a conduit 68 to the surge tank 40. The surge tank 40 is maintained at 38°C to 42°C (usually 40.5°C to 42°C) so as to kill or re-liquify any crystallized fat that returns to it from the entry station 38. Then, after it has been re-heated in the surge tank 40, a fifth process pump 44 will return the re-heated mixture from the surge tank 40 back to the tempering unit 20.

While the quantity of the product that is deposited on the belt 24 at 62 is demand controlled, means are provided including a bypass valve structure 70 and the conduit 68 to return excess homogenous mixed product to the surge tank 40. (cf fig 2) What remains passes beneath the adjustable levelling means 22, which includes a heated bar spreader. The thickness of the layer 64 can be adjusted by adjusting means 72 on the levelling means 22, so as to move it up or down away from or closer to the surface of the belt 24. Thus, if there is too much mixed liquid product being delivered at 62 for the required depth or thickness of the layer 64 being deposited on the belt, then the bypass valve structure 70 will open and the excess mixed liquid product is returned to the surge tank 40.

From the above, it will be seen that any mixed liquid product that is not deposited on the belt for transfer through the cooling tunnel is continuously being circulated from the entry station 38 through the surge tank 40 to the tempering unit 20.

Obviously, the process step (a) of mixing the cheese solids and the cheese-compatible and bakery-compatible oil may also comprise optionally mixing additional flavoring ingredients or additional coloring ingredients. As noted above, the additional flavoring ingredients may be chosen from the group consisting of spices, herbs, cheese-compatible enzymes, salt, or other cheese-compatible natural flavors; and the additional coloring ingredients may be chosen from the group consisting of annatto colors and other cheese-compatible natural coloring agents.

So as to ensure that the layer of product 64 when it is dried and cooled after passing through the cooling tunnel 26 will break into small discrete dry flakes, the deposited layer 64 is preferably scored on said belt by passing said deposited mixture on said belt in a direction parallel to the direction of motion of said belt 24 beneath one or a plurality of scoring pins or blades 76. It will be seen from Figure 3 that a plurality of score lines 77 can be formed in the layer 64, and thereby the dry flake product having discrete width portions will be formed. This is because the mixture of cheese solids, cheese compatible and bakery compatible oils and other additional ingredients is sufficiently viscous when it is scored to at least partially retain the scored impressions that are made in it.

Process step (g) is carried out by passing said belt 24 and said scored deposited mixture layer 64 thereon into a breaker station 54. At that station, said belt and said mixture are passed over a fixed roller 56 and under a breaker roller 58. Because the belt is flexible, the weight of the breaker roller 58 presses down onto the scored deposited mixture, and the scored mixture fractures along fracture lines which are transverse to the direction of motion of said belt 24.
Thus, there are formed discrete dry cooled flakes defined at their edges by the score lines 77, and transverse to the belt 24 by the fracture lines formed beneath the breaker roller 58.

The breaker roller 58 may be adjustable as to its distance away from the fixed roller 56, and as to the pressure that it exerts downwardly. The adjustment as to its lengthwise adjustment along the belt 24 may be arranged by adjusting the end of arm 80 relative to the mounting table 82; and the pressure exerted by the breaker roller 58 may be adjusted by adjusting a tension spring 84 -- which may also be an adjustable weight. So as to ensure that the breaker roller 58 is kept clean, a scraper 86 may be associated with it.

In general, so as to assure a controlled fracture of the layer 64 as it passes beneath the breaker roller 58, the diameter of the breaker roller 58 is larger than that of the fixed roller 56.

The scraper 60 and associated chute 66 are arranged to scrape said discrete dry cooled flakes that are then formed on the belt 24 as they pass beneath the breaker roller 58 off the surface of said moving belt, from which they may pass down the chute 66 into suitable waiting containers for additional handling and/or storage and/or shipping.

Tightening means 46 may be provided, for example on the roller 47 around which the belt 24 wraps at the entrance end of the cooling tunnel 26. The tightening means 46 provides enough adjustment that the belt 24 will be maintained substantially taut and level as it passes through the cooling tunnel 26. Likewise, a speed adjustment 50 may be provided so as to control the speed of the flexible moving belt 24 so that any portion of the belt and the mixture deposited on the belt will remain in the cooling tunnel 26 for from 3 minutes to 6 minutes. Still further, temperature adjustment means 52 will be provided to control the temperature of the cooling tunnel 26 so that the mixture that is on the belt 24 will exit the cooling tunnel at a temperature of from 6°C to 12°C.

As noted above, the dimensions of the dry cheese-based flakes as they are formed after passing beneath the breaker roller 58 will be such that their thickness is typically 1.0 mm to 3.0 mm. The distance between the scoring blades 76 may be adjustable from typically 1.0 cm up to 3.0 cm. Likewise, the adjustment of the breaker roller 58 with respect to the fixed roller 56 will result in fracture lines transversely across the dried layer 64 at distances of from about 1.0 cm up to 3.0 cm.

It has been found that, typically, commercial bakers will require that the cheese-based dry product will have dimensions of approximately 1.5 mm thick and be about 1.5 cm square. However, it is recognized that the dry cheese-based flake product flakes will possibly break up into smaller flakes during storage and shipping or handling, or even by further processing in the bakery.

This is quite acceptable, because the cheese-based flakes will other wise retain their flavor and their physical integrity until the baked product is consumed. In that regard, it will be noted that the dry cheese-based flake product flakes are typically relatively frangible when they are cool, but that are somewhat flexible when heated above room temperature, as will occur during the baking process.

Finally the apparatus that can be applied to perform the process according to the invention is formulated in claims 17-21, in accordance with the disclosures above and as illustrated by fig. 1-4.

There has been described dry cheese-based flake products which may be incorporated into baked goods and other flour confections. Those products are derived from cheese solids together with cheese-compatible and bakery-compatible oils, and other optional ingredients. Processes for manufacturing the dry flake cheese-based products have been described, and also the apparatus on which the products may be manufactured has been described. The product that is obtained has excellent cheese flavoring without a gummy texture or lactose burning when it is incorporated into a baked product.

Applicant notes, for the record, the following prior art references:

United States patent No. 5,064,669 issued November 12, 1991, provides background teachings to the extent that the patent discloses discrete particles of solid encapsulated flavoring agent encapsulated in a high melting point encapsulating or enrobing material such as fat and/or wax. This permits controlled release of flavor upon heating of the food product during its normal preparation, such as in a microwave oven.

United States patent No. 4,567,047 issued January 28, 1986, provides a snack product where hard butter is used to enrobe cheese particles so as to mask the grittiness of the ground cheese powders that are being used and so as to preclude moisture pick-up by the manufactured product once it has been manufactured. Hard butters have a very high melting point. Thus, the prior disclosures differ from the teachings of the present invention.

The scope of the invention is defined by the appended claims.

## Claims

1. A cheese-based dry flake product for incorporation into baked goods and flour confections, wherein said dry flake product comprises from nearly 0 to 2% moisture, from 20% to 50% cheese solids, with the balance being a cheese-compatible and bakery-compatible oil that is substantially liquid in the range of 35°C to 40°C, and which exhibits a solid fat index curve characteristic having defined ranges of solid fat and liquid fat components at defined temperatures, as follows:
10.0°C -- 43-66% solid fats, balance liquid fats
21.1°C -- 32-52% solid fats, balance liquid fats
26.6°C -- 20-44% solid fats, balance liquid fats
33.3°C -- 6-25% solid fats, balance liquid fats
40.0°C -- 0-5% solid fats, balance liquid fats;
wherein said cheese solids are naturally occurring cheese solids derived from cheeses from which substantially all water has been removed, and said cheese solids comprise the remaining butterfat, protein and lactose constituents of said cheeses;
wherein said cheese-compatible and bakery-compatible oil is selected from the group consisting of suitable vegetable oils and liquid butter fats, and mixtures thereof, which exhibit the said solid fat index curve characteristic;
wherein said cheese-compatible and bakery-compatible oil further exhibits similar melting points as those of butterfat;
wherein said cheese-compatible and bakery-compatible oil is miscible with liquid butterfat constituent of said cheese solids, in any proportion, at temperatures of 35°C to 40°C, so as to make a homogeneous mixture therewith, in which said protein and lactose constituents are held in suspension; and
wherein said homogeneous mixture solidifies at 6°C to 12°C and remains firm at room temperature of about 20°C±.

2. The cheese-based dry flake product of claim 1, wherein said balance constituent of said product may optionally further comprise additional flavoring ingredients selected from the group consisting of spices, herbs, cheese-compatible enzymes, salt, and other cheese-compatible natural flavors.

3. The cheese-based dry flake product of claim 2, wherein said balance constituent of said product may optionally further comprise additional coloring ingredients selected from the group consisting of annatto colors and other cheese-compatible natural coloring agents.

4. The cheese-based dry flake product of claim 1, wherein said cheese-compatible and bakery-compatible oil is selected from the group consisting of suitable vegetable oils and liquid butter fats, and mixtures thereof.

5. The cheese-based dry flake product of claim 1, wherein said cheese-compatible and bakery-compatible oils exhibit the characteristic that they are stable at room temperature so as not to smear during mixing with the other prescribed ingredients of said baked goods and flour confections into which said cheese-based dry flake product is being incorporated, prior to said baked goods and flour confections being baked.

6. The cheese-based dry flake product of claim 1, wherein said cheese-compatible and bakery-compatible oils exhibit the characteristic that they will stay substantially firm during a baking process at temperatures above 170°C.

7. The cheese-based dry flake product of claim 1, wherein said cheese-compatible and bakery-compatible oils exhibit the characteristic that they will stay substantially firm during a bakery proofing process at temperatures above 40°C.

8. The cheese-based dry flake product of claim 1, wherein, when necessary, solid fat constituents of said vegetable oils are processed by being blended or fractionated or hydrogenated only to the extent necessary so as to obtain the said solid fat index curve characteristic having said defined ranges of solid fat and liquid fat components at said defined temperatures.

9. A process for the preparation of cheese-based dry flake product for incorporation into baked goods and flour confections, wherein said dry flake product comprises from nearly 0 to 2% moisture, from 20% to 50% cheese solids, with the balance being a cheese-compatible and bakery-compatible oil that is substantially liquid in the range of 35°C to 40°C, and which exhibits a solid fat index curve characteristic having defined ranges of solid fat and liquid fat components at defined temperatures, as follows:
10.0°C -- 43-66% solid fats, balance liquid fats
21.1°C -- 32-52% solid fats, balance liquid fats
26.6°C -- 20-44% solid fats, balance liquid fats
33.3°C -- 6-25% solid fats, balance liquid fats
40.0°C -- 0-5% solid fats, balance liquid fats;
wherein said cheese solids are naturally occurring cheese solids derived from cheeses from which substantially all water has been removed, and said cheese solids comprise the remaining butterfat, protein and lactose constituents of said cheeses;
wherein said cheese-compatible and bakery-compatible oil is selected from the group consisting of suitable vegetable oils and liquid butter fats, and mixtures thereof, which exhibit the said solid fat index curve characteristic;
wherein said cheese-compatible and bakery-compatible oil further exhibits similar melting points as those of butterfat;
wherein said cheese-compatible and bakery-compatible oil is miscible with liquid butterfat constituent of said cheese solids, in any proportion, at temperatures of 35°C to 40°C, so as to make a homogeneous mixture therewith, in which said protein and lactose constituents are held in suspension; and
wherein said homogeneous mixture solidifies at 6°C to 12°C and remains firm at room temperature of about 20°±;
said process comprising the steps of:
(a) mixing said cheese solids and said cheese-compatible and bakery-compatible oil in a mixer (16) so as to obtain a substantially homogenous mixture, said mixing step being carried out at a temperature of 40°C ± 1.5°C;
(b) transferring said homogenous mixture to a holding tank (18), and maintaining the temperature of said homogenous mixture at 40.5°C to 42°C;
(c) continuously agitating said homogenous mixture while it is in said holding tank (18);
(d) pumping said homogenous mixture to a tempering unit (20), continually agitating said homogenous mixture while in said tempering unit (20), and slightly cooling said homogenous mixture to 33°C ± 1°C;
(e) transferring said slightly cooled homogenous mixture and depositing the same in a substantially thin substantially even layer on a moving belt (24);
(f) passing said moving belt (24) through a cooling tunnel (26) so that any portion of said mixture remains in said cooling tunnel (26) for from three minutes to six minutes, and is cooled to a temperature of from 6°C to 12°C;
(g) breaking said cooled mixture into discrete dry cooled flakes as it exits said cooling tunnel (26) on said belt; and
(h) removing said discrete dry cooled flakes from said belt for further handling and/or storage and/or shipping.

10. The process of claim 9, wherein steps (d) and (e) are carried out continuously, and any excess mixture not deposited in step (e) is returned to a surge tank (40) from said tempering unit (20) and is heated to 40°C ± 2°C to re-liquify any crystallized fat in said excess mixture, and then said re-heated mixture is returned to said tempering unit (20).

11. The process of claim 10, wherein step (a) may further optionally comprise adding additional flavoring ingredients to said mixture, where said flavoring ingredients are selected from the group consisting of spices, herbs, cheese-compatible enzymes, salt, and other cheese-compatible natural flavors.

12. The process of claim 11, wherein step (a) may further optionally comprise adding additional coloring ingredients to said mixture, where said coloring ingredients are selected from the group consisting of annatto colors and other cheese-compatible natural coloring agents.

13. The process of claim 12, further comprising the step of:
(i) after step (e), scoring said deposited mixture on said belt in a direction parallel to the direction of motion of said belt by passing said deposited mixture on said belt beneath one or a plurality of scoring pins or blades (76).

14. The process of claim 13, wherein step (g) is carried out by passing said belt and said scored, deposited mixture thereon over a fixed roller (56) and under a breaker roller (58), wherein said breaker roller (58) presses down onto said scored, deposited mixture and said belt is sufficiently flexible that said scored, deposit mixture fractures along fracture lines transverse to the direction of motion of said belt so as to form said discrete dry cooled flakes.

15. The process of claim 14, wherein step (h) is carried out at least in part by scraping said discrete dry cooled flakes off said moving belt (24).

16. The process of claim 14, wherein the thickness of said deposited mixture on said belt is from 1.0 mm to 3.0 mm, the distance between each of a plurality of scoring pins or blades (76) is from 1.0 cm to 3.0 cm, and said breaker roller (58) is positioned with respect to said fixed roller (56) so that the distance between consecutive fracture lines is 1.0 cm to 3.0 cm.

17. Apparatus for the production of cheese-based dry flake product, wherein said apparatus comprises:
at least one thermostatically controlled mixer (16) capable of thoroughly mixing dried cheese solids, cheese-compatible and bakery-compatible oils, flavoring ingredients, and coloring ingredients, at controlled temperatures of 40°C ± 1.5°C;
first pump means (32) for pumping the resultant mixture from said at least one mixer (16) to at least one holding tank (18);
at least one holding tank (18) capable of continuously agitating said mixture when in said tank, and capable of maintaining the temperature of said agitated mixture at 40.5°C to 42°C;
second pump means (34) for pumping said agitated mixture from said at least one holding tank (18) to a tempering unit (20);
a tempering unit (20) capable of continuously agitating said mixture when in said tempering unit (20), and capable of slightly cooling said agitated mixture to a temperature of 33°C ± 1°C;
third pump means (34) for transferring said slightly cooled agitated mixture to a moving belt (24);
a flexible moving belt (24) onto which said slightly cooled agitated mixture may be deposited;
adjustable levelling means (22) for levelling and controlling the thickness of mixture being deposited on said flexible moving belt (24);
a cooling tunnel (26) through which said flexible moving belt (24) passes;
tightening means (46) for maintaining said flexible moving belt (24) substantially taut and level as it passes through said cooling tunnel (26);
speed adjustment means (50) for controlling the speed of said flexible moving belt (24) so that any portion of said belt and said mixture deposited thereon remains in said cooling tunnel (26) for from three minutes to six minutes;
temperature adjustment and control means (52) for cooling said cooling tunnel (26) so that the temperature of any portion of said mixture on said flexible moving belt (24) is cooled to a temperature in the range of 6°C to 12°C when it exits said cooling tunnel (26);
breaker means (54) comprising a fixed roller (56) over which said flexible moving belt (24) and said mixture thereon passes, and a breaker roller (58) under which said flexible moving belt (24) and said mixture thereon passes after passing over said fixed roller (56), said breaker roller (58) being adjustable as to its distance away from said fixed roller (56) and as to the pressure it exerts downwardly on said flexible moving belt (24) and said mixture thereon, so as to create fracture lines in said mixture in a direction transverse to the direction of motion of said flexible moving belt (24); and
scraper means (60) for removing dry cooled flakes of said mixture from said flexible moving belt (24) after said mixture has been fractured by said breaker roller (58).

18. The apparatus of claim 17, further comprising a surge tank (40) for said tempering unit (20), and fourth pump means (42) for returning any excess portion of mixture that is not deposited on said flexible moving belt (24) to said surge tank (40);
heating means for heating said excess mixture to 40°C ± 2°C; and
fifth pump means (44) for returning said re-heated mixture to said tempering unit (20).

19. The apparatus of claim 18, further comprising scoring means (76) for inscribing one or a plurality of score lines (77) in said deposited mixture after it has passed below said adjustable levelling means (22).

20. The apparatus of claim 19, further comprising scraper means (86) for scraping off any of said dry cooled flakes that may adhere to said breaker roller (58).

21. The apparatus of claim 19, where the diameter of said breaker roller (58) is greater than the diameter of said fixed roller (56).

## Patentansprüche

1. Käsebasiertes trockenes Flockenprodukt zur Einverleibung in Backwaren und Mehlkonditorwaren, worin das trockene Flockenprodukt von nahezu 0 bis 2% Feuchtigkeit, 20 bis 50% Käsefeststoffe, und als Rest ein käse- und backverträgliches Öl umfaßt, das im wesentlichen im Bereich von 35°C bis 40°C flüssig ist und welches eine Festfettindexkurvencharakteristik mit definierten Bereichen von Festfett- und flüssigen Fettkomponenten bei definierten Temperaturen wie folgt zeigt:
10,0°C: 43 bis 66% Festfette, Rest flüssige Fette;
21,1°C: 32 bis 52% Festfette, Rest flüssige Fette;
26,6°C: 20 bis 44% Festfette, Rest flüssige Fette;
33,3°C. 6 bis 25 % Festfette, Rest flüssige Fette und
40,0°C: 0 bis 5% Festfette, Rest flüssige Fette,
worin die Käsefeststoffe natürlich vorkommende Käsefeststoffe sind, herführend von Käsen, von denen im wesentlichen sämtliches Wasser entfernt wurde und wobei die Käsefeststoffe die restlichen Butterfett-, Protein- und Lactosebestandteile der Käse umfassen;
worin das käse- und backverträgliche Öl ausgewählt ist aus der aus geeigneten Pflanzenölen und flüssigen Butterfetten und Mischungen hiervon bestehenden Gruppe, die die Festfettindexkurvencharakteristik zeigen;
worin das käse- und backverträgliche Öl weiterhin ähnliche Schmelzpunkte wie die von Butterfett zeigt;
worin das käse- und backverträgliche Öl mit dem flüssigen Butterfettbestandteil der Käsefeststoffe in jedem Verhältnis bei Temperaturen von 35°C bis 40°C mischbar ist, um damit eine homogene Mischung herzustellen, in der die Protein- und Lactosebestandteile in Suspension gehalten werden und
worin sich die homogene Mischung bei 6°C bis 12°C verfestigt und bei Raumtemperatur von etwa 20°C± fest bleibt.

2. Käsebasiertes trockenes Flockenprodukt nach Anspruch 1, worin der restliche Bestandteil des Produkts weiterhin optional zusätzliche Aromatisierungsbestandteile, ausgewählt aus der aus Gewürzen, Kräutern, käseverträglichen Enzymen, Salz und anderen käseverträglichen natürlichen Aromen bestehenden Gruppe umfaßt.

3. Käsebasiertes trockenes Flockenprodukt nach Anspruch 2, worin der restliche Bestandteil des Produkts weiterhin optional zusätzliche farbgebende Bestandteile, ausgewählt aus der aus Annattofarbstoffen und anderen käseverträglichen natürlichen farbgebenden Mitteln bestehenden Gruppe umfaßt.

4. Käsebasiertes trockenes Flockenprodukt nach Anspruch 1, in dem das käse- und backverträgliche öl ausgewählt ist aus der aus geeigneten Pflanzenölen und flüssigen Butterfetten und Mischungen hiervon bestehenden Gruppe.

5. Käsebasiertes trockenes Flockenprodukt nach Anspruch 1, in dem die käse- und backverträglichen Öle die Eigenschaft zeigen, daß sie bei Raumtemperatur stabil sind, so daß sie während dem Mischen mit anderen zuvor beschriebenen Bestandteilen der Backwaren und Mehlkonditorwaren, in die das käsebasierte trockene Flockenprodukt einverleibt wird, nicht schmierig werden, bevor die Backwaren und Mehlkonditorwaren gebacken werden.

6. Käsebasiertes trockenes Flockenprodukt nach Anspruch 1, in dem die käse- und backverträglichen Öle die Eigenschaft zeigen, daß sie während eines Backverfahrens bei Temperaturen über 170°C im wesentlichen fest bleiben.

7. Käsebasiertes trockenes Flockenprodukt nach Anspruch 1, in dem die käse- und backverträglichen Öle die Eigenschaft zeigen, daß sie während des Aufgehenlassens im Backverfahren bei Temperaturen über 40°C im wesentlichen fest bleiben.

8. Käsebasiertes trockenes Flockenprodukt nach Anspruch 1, worin, wenn notwendig, Festfettbestandteile der Pflanzenöle durch Vermischen oder Fraktionieren oder Hydrieren nur zu dem Ausmaß, das notwendig ist, um die Festfettindexkurvencharakteristik mit den definierten Bereichen an Festfett- und flüssigen Fettkomponenten bei den definierten Temperaturen zu erhalten, verarbeitet werden.

9. Verfahren zur Herstellung eines käsebasierten trockenen Flockenprodukts zur Einverleibung in Backwaren und Mehlkonditorwaren, worin das trockene Flockenprodukt von nahezu 0 bis 2% Feuchtigkeit, 20 bis 50% Käsefeststoffe und als Rest ein käse- und backverträgliches Öl umfaßt, das im Bereich von 35°C bis 40°C im wesentlichen flüssig ist und welches eine Festfettindexkurvencharakteristik mit definierten Bereichen von Festfett- und flüssigen Fettkomponenten bei definierten Temperaturen wie folgt aufweist:
10,0°C: 43 bis 66% Festfette, Rest flüssige Fette;
21,1°C: 32 bis 52% Festfette, Rest flüssige Fette;
26,6°C: 20 bis 44% Festfette, Rest flüssige Fette;
33,3 °C. 6 bis 25 % Festfette, Rest flüssige Fette und
40,0°C: 0 bis 5% Festfette, Rest flüssige Fette.
worin die Käsefeststoffe natürlich vorkommende Käsefeststoffe sind, herrührend von Käsen, von denen im wesentlichen sämtliches Wasser entfernt wurde, und wobei die Käsefeststoffe die restlichen Butterfett-, Protein- und Lactosebestandteile der Käse umfassen;
worin das käse- und backverträgliche Öl ausgewählt ist aus der aus geeigneten Pflanzenölen und flüssigen Butterfetten und Mischungen hiervon bestehenden Gruppe, die die Festfettindexkurvencharakteristik zeigen;
worin das käse- und backverträgliche Öl weiterhin ähnliche Schmelzpunkte wie die von Butterfett zeigt;
worin das käse- und backverträgliche Öl mit dem flüssigen Butterfettbestandteil der Käsefeststoffe in jedem Verhältnis bei Temperaturen von 35°C bis 40°C mischbar ist,
um damit eine homogene Mischung herzustellen, in der die Protein- und Lactosebestandteile in Suspension gehalten werden und
worin sich die homogene Mischung bei 6°C bis 12°C verfestigt und bei Raumtemperatur von etwa 20°C± fest bleibt,
wobei das Verfahren die Schritte umfaßt:
(a) Mischen der Käsefeststoffe und des käse- und backverträglichen Öls in einem Mischer (16), um eine im wesentlichen homogene Mischung zu erhalten, wobei der Mischungsschritt bei einer Temperatur von 40°C ± 1,5°C durchgeführt wird;
(b) Überführen der homogenen Mischung in einen Vorratstank (18), worin die Temperatur der homogenen Mischung bei 40,5°C bis 42°C gehalten wird;
(c) kontinuierliches Rühren der homogenen Mischung, während sie sich im Vorratstank (18) befindet;
(d) Pumpen der homogenen Mischung zu einer Temperiereinheit (20), kontinuierliches Rühren der homogenen Mischung, während sie sich in der Temperiereinheit (20) befindet und leichtes Abkühlen der homogenen Mischung auf 33°C ± 1°C;
(e) Überführen der leicht gekühlten homogenen Mischung und Aufbringen derselben in einer im wesentlichen dünnen und im wesentlichen gleichmäßigen Schicht auf ein Laufband (24);
(f) Passieren des Laufbands (24) durch einen Kühltunnel (26), so daß jeder Abschnitt der Mischung für 3 Minuten bis 6 Minuten im Kühltunnel (26) verbleibt und Abkühlen auf eine Temperatur von 6°C bis 12°C;
(g) Aufbrechen der gekühlten Mischung in einzelne trockene gekühlte Flokken, wenn sie den Kühltunnel (26) auf dem Band verläßt und
(h) Entfernen der einzelnen getrockneten gekühlten Flocken vom Band zur weiteren Handhabung und/oder Lagerung und/oder Transport.

10. Verfahren nach Anspruch 9, worin die Schritte (d) und (e) kontinuierlich durchgeführt werden und jede Überschußmischung, die nicht in Schritt (e) aufgebracht wird, zu einem Ausgleichstank (40) von der Temperiereinheit (20) zurückgeführt wird und auf 40°C ± 2°C erhitzt wird, um jedes auskristallisierte Fett in der Überschußmischung erneut zu verflüssigen und dann die wiedererhitzte Mischung zur Temperiereinheit (20) zurückzuführen.

11. Verfahren nach Anspruch 10, worin Schritt (a) weiterhin optional die Zugabe zusätzlicher Aromatisierungsbestandteile zur Mischung umfassen kann, wobei die Aromatisierungsbestandteile ausgewählt sind aus der aus Gewürzen, Kräutern, käseverträglichen Enzymen, Salz und anderen käseverträglichen natürlichen Aromen bestehenden Gruppe.

12. Verfahren nach Anspruch 11, worin Schritt (a) ferner optional die Zugabe zusätzlicher farbgebender Bestandteile zur Mischung umfassen kann, wobei die farbgebenden Bestandteile ausgewählt sind aus der aus Annattofarbstoffen und anderen käseverträglichen natürlichen farbgebenden Mitteln bestehenden Gruppe.

13. Verfahren nach Anspruch 12, weiterhin umfassend den Schritt:
(i) nach Schritt (e) Einkerben der aufgebrachten Mischung auf dem Band in einer Richtung parallel zur Bewegungsrichtung des Bands durch Durchführen der aufgebrachten Mischung auf dem Band unterhalb eines oder einer Vielzahl von Einkerbungsstiften oder -klingen (76).

14. Verfahren nach Anspruch 13, worin Schritt (g) durchgeführt wird durch Hindurchführen des Bands und der eingekerbten und darauf aufgebrachten Mischung über eine feste Walze (56) und unter einer Aufbrechwalze (58), wobei die Aufbrechwalze (58) auf die eingekerbte aufgebrachte Mischung preßt und das Band ausreichend flexibel ist, daß die eingekerbte aufgebrachte Mischung entlang der Bruchlinien transversal zur Bewegungsrichtung des Bands zerbricht, um einzelne trockene gekühlte Flocken zu bilden.

15. Verfahren nach Anspruch 14, worin Schritt (h) zumindest teilweise durch Abschaben der einzelnen trockenen kühlen Flocken vom Laufband (24) durchgeführt wird.

16. Verfahren nach Anspruch 14, worin die Dicke der aufgebrachten Mischung auf dem Band 1,0 mm bis 3,0 mm beträgt, die Entfernung zwischen jeder der Vielzahl von Einkerbungsstiften oder -klingen (76) 1,0 cm bis 3,0 cm beträgt und die Aufbrechwalze (58), bezogen auf die feste Walze (56), so angeordnet ist, daß die Entfernung zwischen aufeinanderfolgenden Bruchlinien 1,0 cm bis 3,0 cm beträgt.

17. Vorrichtung zur Herstellung des käsebasierten trockenen Flockenprodukts, worin die Vorrichtung umfaßt:
mindestens einen thermostatisch gesteuerten Mischer (16) der in der Lage ist trockene Käsefeststoffe, käse- und backverträgliche Öle, Aromatisierungsbestandteile und farbgebende Bestandteile bei gesteuerten Temperaturen von 40°C ± 1,5°C gründlich zu mischen;
erste Pumpmittel (32) zum Pumpen der resultierenden Mischung von mindestens einem Mischer (16) zu mindestens einem Vorratstank (18);
mindestens ein Vorratstank (18), der kontinuierlich gerührt werden kann, wenn sich die Mischung im Tank befindet und in dem die Temperatur der gerührten Mischung bei 40,5°C bis 42°C gehalten werden kann;
zweite Pumpmittel (34) zum Pumpen der gerührten Mischung von mindestens einem Vorratstank (18) zu einer Temperiereinheit (20);
eine Temperiereinheit (20), die kontinuierlich gerührt werden kann, wenn sich die Mischung in der Temperiereinheit (20) befindet, und die ein leichtes Abkühlen der gerührten Mischung auf eine Temperatur von 33°C ± 1°C ermöglicht;
dritte Pumpmittel (34) zur Überführung der leicht gekühlten gerührten Mischung auf ein Laufband (24);
ein flexibles Laufband (24), auf dem die leicht abgekühlte gerührte Mischung aufgebracht werden kann;
einstellbare Nivellierungsmittel (22) zum Nivellieren und Steuern der Dicke der auf dem flexiblen Laufband (24) aufgebrachten Mischung;
einen Kühltunnel (26), durch den das flexible Laufband (24) hindurchführt;
Befestigungsmittel (46), um das flexible Laufband (24), wenn es durch den Kühltunnel (26) passiert, im wesentlichen straff und eben zu halten;
Geschwindigkeitseinstellmittel (50) zur Steuerung der Geschwindigkeit des flexiblen Laufbands (24), so daß jeder Abschnitt des Bands und der darauf aufgebrachten Mischung 3 Minuten bis 6 Minuten im Kühltunnel (26) verbleibt;
Temperatureinstell- und -steuermittel (52) zum Abkühlen des Kühltunnels (26), so daß die Temperatur jeden Abschnitt der Mischung auf dem flexiblen Laufband (24) auf eine Temperatur im Bereich von 6°C bis 12°C abgekühlt wird, wenn es den Kühltunnel (26) verläßt;
Aufbrechmittel (54), umfassend eine feste Walze (56), über die das flexible Laufband (24) und die Mischung hierauf durchtritt, und eine Aufbrechwalze (58) unter der das flexible Laufband (24) und die Mischung darauf nach Passage über die feste Walze (56) durchtritt, wobei die Aufbrechwalze (58) in ihrem Abstand von der festen Walze (56) und ihrem Druck, den sie nach unten auf das flexible Laufband (24) und die Mischung darauf ausübt, einstellbar ist, um Bruchlinien in der Mischung in einer Richtung transversal zur Bewegungsrichtung des flexiblen Laufbands (24) auszubilden und Schabmittel (60) zum Entfernen trockener gekühlter Flocken der Mischung vom flexiblen Laufband (24), nachdem die Mischung durch die Aufbrechwalze (58) aufgebrochen wurde.

18. Verfahren nach Anspruch 17 weiterhin umfassend einen Ausgleichstank (40) für die Temperiereinheit (20) und vierte Pumpmittel (42) zum Zurückführen jeder Überschußmenge der Mischung, die nicht auf dem flexiblen Laufband (24) aufgebracht wird, zum Ausgleichstank (40);
Heizmittel zum Erwärmen der Überschußmischung auf 40°C ± 2°C und
fünfte Pumpmittel (44) zum Zurückführen der erneut erhitzten Mischung zur Temperiereinheit (20).

19. Vorrichtung nach Anspruch 18, weiterhin umfassend Einkerbungsmittel (76), um eine oder eine Vielzahl von Einkerbungslinien (77), in die aufgebrachte Mischung zu schreiben, nachdem diese unterhalb der einstellbaren Nivellierungsmittel (22) hindurchgeführt wurde.

20. Vorrichtung nach Anspruch 19, weiterhin umfassend Schabmittel (86), um jede der trockenen gekühlten Flocken, die an der Aufbrechwalze (58) haften kann, abzuschaben.

21. Vorrichtung nach Anspruch 19, worin der Durchmesser der Aufbrechwalze (58) größer ist als der Durchmesser der festen Walze (56).

## Revendications

1. Produit en flocons secs à base de fromage destiné à être incorporé dans des produits cuisinés et des préparations de farine, dans lequel ledit produit en flocons secs comprend de 0 à 20 % d'humidité, de 20 à 50 % de solides de fromage, le reste étant composé d'une huile compatible avec le fromage et compatible avec les produits cuisinés qui est substantiellement solide à une température comprise dans la gamme allant de 35°C à 40°C et qui se caractérise au niveau de la courbe d'indice de matière grasse solide par le fait qu'elle a des gammes définies de composants gras liquides et solides à des températures définies qui sont comme suit :
10,0°C -- 43 - 66 % de matières grasses solides, le reste étant des matières grasses liquides
21,1°C - 32 - 52 % de matières grasses solides, le reste étant des matières grasses liquides
26,6°C - 20 - 40 % de matières grasses solides, le reste étant des matières grasses liquides
33,3°C - 6 - 25 % de matières grasses solides, le reste étant des matières grasses liquides
40°C - 0 - 5 % de matières grasses solides, le reste étant des matières grasses liquides
dans lequel les solides de fromage sont des solides de fromage d'origine naturels dérivés de fromages desquels on a éliminé substantiellement toute l'eau, et dans lequel lesdits solides de fromage comprennent la matière grasse laitière, les protéines et les composants lactose restants desdits fromages ;
dans lequel ladite huile compatible avec le fromage et compatible avec les produits cuisinés est sélectionnée à partir du groupe composé d'huiles végétales appropriées et des matières grasses de beurre liquides, et des mélanges de celles-ci, et se caractérise par ladite courbe d'indice de matière grasse solide ;
dans lequel ladite huile compatible avec le fromage et compatible avec les produits cuisinés a en outre des points de fusion similaires à ceux de la matière grasse de beurre ;
dans lequel ladite huile compatible avec le fromage et compatible avec les produits cuisinés est miscible avec le composant de matière grasse de beurre liquide desdits solides de fromage, dans n'importe quelle proportion, à des températures de 35°C à 40°C, de façon a former un mélange homogène avec celui-ci, dans lequel lesdits constituants lactose et protéine sont maintenus en suspension, et
dans lequel ledit mélange homogène se solidifie à une température comprise entre 6°C et 12°C et demeure ferme à une température ambiante d'environ plus ou moins 20°C.

2. Produit en flocons secs à base de fromage selon la revendication 1, dans lequel ledit autre constituant faisant l'équilibre dans ledit produit peut, de façon optionnelle, comprendre en outre d'autres ingrédients de sapidité sélectionnés à partir du groupe composé des épices, des condiments, des enzymes compatibles avec le fromage, du sel et d'autres parfums naturels compatibles avec le fromage.

3. Produit en flocons secs à base de fromage selon la revendication 2, dans lequel ledit autre constituant faisant l'équilibre dans ledit produit peut, de façon optionnelle, comprendre d'autres ingrédients colorants sélectionnés à partir du groupe composé des couleurs rocou et des autres agents colorants naturels et compatibles avec le fromage.

4. Produit en flocons secs à base de fromage selon la revendication 1, dans lequel ladite huile compatible avec le fromage et compatible avec les produits cuisinés est sélectionnée à partir du groupe composé des huiles végétales appropriées et des matières grasses liquides du beurre, et des mélanges de celles-ci.

5. Produit en flocons secs à base de fromage selon la revendication 1, dans lequel ladite huile compatible avec le fromage et compatible avec les produits cuisinés présente la caractéristique d'être stable à température ambiante afin de ne pas s'étaler pendant qu'on la mélange aux autres ingrédients prescrits desdits produits cuisinés ou desdites préparations à base de farine dans lesquels est incorporé ledit produit en flocons secs à base de fromage, avant que ne soient cuits lesdits produits cuisinés ou lesdites préparations à base de farine.

6. Produit en flocons secs à base de fromage selon la revendication 1, dans lequel lesdites huiles compatibles avec le fromage et compatible avec les produits cuisinés présentent la caractéristique de demeurer substantiellement fermes au cours d'un processus d'épreuve de cuisson à des températures supérieures à 170°C.

7. Produit en flocons secs à base de fromage selon la revendication 1, dans lequel lesdites huiles compatibles avec le fromage et compatibles avec les produits cuisinés présentent la caractéristique de demeurer substantiellement fermes au cours d'un processus de cuisson à des températures supérieures à 40°C.

8. Produit en flocons secs à base de fromage selon la revendication 1, dans lequel, si nécessaire, les constituants de matière grasse solide desdites huiles végétales sont traitées par mélange ou sont fractionnées, ou sont hydrogénées seulement comme nécessaire afin d'obtenir la caractéristique de courbe d'indice de matière grasse solide ayant les gammes définies de composants de matière grasse liquides et de matière grasse solide auxdites températures définies.

9. Procédé de préparation d'un produit en flocons secs à base de fromage destiné à être incorporé dans des produits cuisinés et des préparations à base de farine, dans lequel ledit produit en flocons secs comprend de près de 0 à 2 % d'humidité, de 20 % à 50 % de solides de fromage, le reste étant composé d'une huile compatible avec le fromage et compatible avec les produits cuisinés qui est substantiellement liquide dans la gamme de températures allant de 35°C à 40°C et qui se caractérise au niveau de la courbe d'indice de matière grasse solide par le fait qu'elle a des gammes définies de composants gras liquides et solides à des températures définies qui sont comme suit :
10,0°C -- 43 - 66 % de matières grasses solides, le reste étant des matières grasses liquides
21,1°C - 32 - 52 % de matières grasses solides, le reste étant des matières grasses liquides
26,6°C - 20 - 40 % de matières grasses solides, le reste étant des matières grasses liquides
33,3°C - 6 - 25 % de matières grasses solides, le reste étant des matières grasses liquides
40°C - 0 - 5 % de matières grasses solides, le reste étant des matières grasses liquides
dans lequel les solides de fromage sont des solides de fromage d'origine naturels dérivés de fromages desquels on a éliminé substantiellement toute l'eau, et dans lequel lesdits solides de fromage comprennent la matière grasse laitière, les composants protéine et lactose restants desdits fromages ;
dans lequel ladite huile compatible avec le fromage et compatible avec les produits cuisinés est sélectionnée à partir du groupe composé d'huiles végétales appropriées et des matières grasses de beurre liquides, et des mélanges de celles-ci, et se caractérise par ladite courbe d'indice de matière grasse solide ;
dans lequel ladite huile compatible avec le fromage et compatible avec les produits cuisinés a en outre des points de fusion similaires à ceux de la matière grasse de beurre ;
dans lequel ladite huile compatible avec le fromage et compatible avec les produits cuisinés est miscible avec le composant de matière grasse de beurre liquide desdits solides de fromage, dans n'importe quelle proportion, à des températures de 35°C à 40°C, de façon à former un mélange homogène avec celui-ci, dans lequel lesdits constituants lactose et protéine sont maintenus en suspension, et
dans lequel ledit mélange homogène se solidifie à une température comprise entre 6°C et 12°C et demeure ferme à une température ambiante d'environ plus ou moins 20°C ;
ledit procédé comprenant les étapes consistant à :
(a) mélanger lesdits solides de fromage et ladite huile compatible avec le fromage et compatible avec les produits cuisinés dans un mélangeur (16) afin d'obtenir un mélange substantiellement homogène, ladite étape de mélange étant effectuée à une température de 40°C, plus ou moins 1,5°C ;
(b) transférer ledit mélange homogène dans une cuve de maintien (18) et de maintenir le mélange dudit mélange homogène à une température allant de 40,5°C à 42°C ;
(c ) agiter ledit mélange homogène de façon continue pendant que celui-ci est dans ladite cuve de maintien (18) ;
(d) pomper ledit mélange homogène vers une unité de maintien de température (20), tout en continuant à agiter le mélange homogène pendant que celui-ci est dans ladite unité de maintien de la température (20) et en refroidissant légèrement ledit mélange homogène à une température de 33°C, plus ou moins 1°C ;
(e) transférer ledit mélange homogène légèrement refroidi et le déposer en une couche substantiellement mince et substantiellement uniforme sur un tapis transporteur (24) ;
(f) faire passer ledit tapis transporteur (24) au travers d'un tunnel de refroidissement (26) de telle sorte que n'importe quelle partie dudit mélange demeure dans ledit tunnel de refroidissement (26) pendant une durée allant de trois à six minutes et soit refroidie à une température allant de 6°C à 12°C ;
(g) casser ledit mélange refroidi en flocons refroidis, secs et discrets lorsque celui-ci sort dudit tunnel de refroidissement (26) sur ledit tapis ; et
(h) retirer lesdits flocons refroidis, secs et discrets dudit tapis en vue d'une manipulation et/ou d'un stockage et/ou d'une expédition ultérieure.

10. Procédé selon la revendication 9, dans lequel les étapes (d) et (e) sont menées à bien en continu, et tout excès de mélange qui n'est pas déposé dans le cadre de l'étape (e) est renvoyé vers une cuve de trop plein (40) depuis ladite unité de maintien de température (20) et est chauffée à une température de 40°C, plus ou moins 2°C, afin de reliquéfier et de cristalliser la matière grasse dans ledit mélange excédentaire, puis ledit mélange réchauffé est renvoyé vers ladite unité de maintien de température (20).

11. Procédé selon la revendication 10, dans lequel l'étape (a) peut en outre et de façon optionnelle, comprendre le fait d'ajouter des ingrédients de sapidité supplémentaires audit mélange, dans lequel lesdits ingrédients de sapidité sont sélectionnés à partir du groupe composé des épices, des condiments, des enzymes compatibles avec le fromage, du sel et d'autres parfums naturels compatibles avec le fromage.

12. Procédé selon la revendication 11, dans lequel l'étape (a) peut en outre et de façon optionnelle comprendre d'autres ingrédients colorants supplémentaires, dans lequel lesdits ingrédients colorants sont sélectionnés à partir du groupe composé des couleurs rocou et d'autres agents colorants naturels compatibles avec le fromage.

13. Procédé selon la revendication 2, comprenant en outre les étapes consistant à :
(i) après l'étape (e) entailler ledit mélange déposé sur ledit tapis dans une direction parallèle au sens de déplacement dudit tapis en faisant passer ledit mélange déposé sur ledit tapis sous une pluralité d'aiguilles ou de lames d'entaillage (76).

14. Procédé selon la revendication 13, dans lequel l'étape (g) est menée à bien en faisant passer ledit tapis et ledit mélange entaillé déposé sur celui-ci sur un rouleau fixe (56) et sous un rouleau cassant (58), dans lequel ledit rouleau cassant (58) presse sur ledit mélange déposé et entaillé et ledit tapis est suffisamment souple pour que ledit mélange entaillé et déposé se brise le long des lignes de fracture qui sont transversales au sens de déplacement dudit tapis afin de former lesdits flocons refroidis, secs et discrets.

15. Procédé selon la revendication 14, dans lequel l'étape (h) est menée à bien au moins en partie en raclant lesdits flocons refroidis secs et discrets pour les retirer dudit tapis transporteur (24).

16. Procédé selon la revendication 14, dans lequel l'épaisseur dudit mélange déposé sur ledit tapis va de 1,0 mm à environ 3,0 mm, la distance entre chacune d'une pluralité d'aiguilles ou de lames d'entaillage (76) étant comprise entre 1,0 cm et 3,0 cm, et ledit rouleau cassant (58) est positionné par rapport audit rouleau fixe (56) de telle sorte que la distance entre les lignes de fracture consécutives soit d'environ 1,0 cm à 3,0 cm.

17. Appareil de production de produit en flocons secs à base de fromage, dans lequel ledit appareil comprend :
au moins un mélangeur à contrôle thermostatique (16) capable de bien mélanger des solides de fromage secs, des huiles compatibles avec le fromage et compatibles avec les produits préparés, des ingrédients de sapidité et des ingrédients colorants, et ce à des températures contrôlées de 40°C, plus ou moins 1,5°C ;
des premiers moyens de pompage (32) permettant de pomper le mélange qui en résulte depuis ledit au moins premier mélangeur (16) jusqu'à au moins une cuve de maintien (18) ;
au moins une cuve de maintien (18) capable d'agiter de façon continue ledit mélange lorsque celui-ci est dans ladite cuve, et capable de maintenir la température dudit mélange agité à une température allant de 40,5°C à 42°C ;
des seconds moyens de pompage (34) permettant de pomper ledit mélange agité depuis ladite au moins première cuve de maintien (18) vers une unité de maintien de température (20) ;
une unité de maintien de température (20) capable d'agiter de façon continue ledit mélange lorsque celui-ci est dans ladite unité de maintien de température (20) et capable de refroidir légèrement ledit mélange agité pour l'amener à une température de 33°C, plus ou moins 1°C ;
des troisièmes moyens de pompage (34) permettant de transférer ledit mélange agité et légèrement agité vers un tapis transporteur (24) ;
un tapis transporteur souple (24) sur lequel peut être déposé ledit mélange agité et légèrement refroidi ;
des moyens réglables de mise à niveau (22) permettant de mettre à niveau et de contrôler l'épaisseur du mélange qui est déposé sur ledit tapis transporteur souple (24) ;
un tunnel de refroidissement (26) au travers duquel passe ledit tapis transporteur souple (24) ;
des moyens de serrage (46) permettant de maintenir ledit tapis transporteur souple (24) dans un état substantiellement tendu et à un niveau uniforme lorsque celui-ci passe au travers dudit tunnel (26) ;
des moyens de réglage de la vitesse (50) permettant de contrôler la vitesse dudit tapis transporteur souple (24) de telle sorte que toute partie dudit tapis et du mélange qui y est déposé demeure dans ledit tunnel de refroidissement (26) pendant une durée allant de trois à six minutes ;
des moyens de réglage et de contrôle de la température (52) permettant de refroidir ledit tunnel de refroidissement (26) de telle sorte que la température de n'importe quelle partie dudit mélange sur ledit tapis transporteur souple (24) soit refroidie à une température comprise dans la gamme allant de 6°C à 12°C lorsque ledit mélange sort dudit tunnel de refroidissement (26) ;
des moyens cassants (54) qui comprennent un rouleau fixe (56) au dessus duquel passent ledit tapis transporteur souple (24) et ledit mélange déposé dessus, puis un rouleau cassant (58) sous lequel passent ledit tapis transporteur souple (24) et ledit mélange déposé dessus après être passés sur ledit rouleau fixe (56), la distance entre ledit rouleau cassant (58) et ledit rouleau fixe (56), ainsi que la pression exercée du haut vers le bas par ledit rouleau cassant (58) sur ledit tapis transporteur souple (24) et sur ledit mélange déposé dessus pouvant être réglées, afin de créer des lignes de fracture dans ledit mélange dans une direction opposée au sens de déplacement dudit tapis transporteur souple (24) ; et
des moyens de raclage (60) permettant de retirer lesdits flocons refroidis secs dudit mélange dudit tapis transporteur souple (24) après que ledit mélange a été cassé par ledit rouleau cassant (58).

18. Appareil selon la revendication 17, comprenant en outre une cuve de trop plein (40) pour l'unité de maintien de température (20) et des quatrième moyens de pompe (42) permettant de renvoyer toute partie excédentaire du mélange n'ayant pas été déposée sur le tapis transporteur souple (24) vers ladite cuve de trop plein (40) ;
des moyens de chauffage permettant de chauffer ledit mélange en excès à une température de 40°C, plus ou moins 2°C ; et
des cinquièmes moyens de pompe (44) permettant de renvoyer ledit mélange réchauffer vers ladite unité de maintien de température (20).

19. Appareil selon la revendication 18, comprenant en outre des moyens d'entaillage (76) permettant d'inscrire une ou une pluralité d'entailles (77) sur ledit mélange déposé après que celui-ci a passé sous lesdits moyens réglables de mise à niveau (22).

20. Appareil selon la revendication 19, comprenant en outre des moyens de raclage (86) permettant de racler tous les flocons refroidis secs qui peuvent adhérer audit rouleau cassant (58).

21. Appareil selon la revendication 19, dans lequel le diamètre dudit rouleau cassant (58) est supérieur au diamètre dudit rouleau fixe (56).
